# EUROPEAN PATENT APPLICATION

(11) **EP 1 336 531 A2**
(43) Date of publication of application: **20.08.2003**
(21) Application number: 03250656.0
(22) Date of filing: 01.02.2003
(51) Int. Cl.: B60N 2/28

(54) **Foldable child seat**

(30) Priority: 16.02.2002 GB 0203733
(71) Applicant: Britax Excelsior Limited, Warwick CV34 6DE (GB)
(72) Inventor: Burleigh, David William, West Sussex PO21 4XN (GB); Lovie, David, deceased (GB)
(74) Representative: Hollinghurst, Antony

(57) **Abstract**

A foldable child seat adapted to be secured on a vehicle seat, has a frame comprising a base structure (20), a backrest structure (34) pivotally mounted on the base structure (20) for angular movement between a deployed position projecting upwardly from a rear edge of the base structure (20) and a stowed position in overlapping abutment with the base structure (20), and a support structure (60) pivotally mounted on the base structure (20) for angular movement between a first position in substantially parallel overlapping relation to the base structure (20) and a second position in which it projects upwardly from the opposite end of the base structure (20) to the backrest structure (34).

## Description

This invention relates to a foldable child seat of the type intended to be secured on a vehicle seat. The invention has particular but not exclusive application to the provision of a foldable child seat for use on an aircraft passenger seat.

According to the invention, a foldable seat of the type described above has a frame comprising a base structure, a backrest structure pivotally mounted on the base structure for angular movement between a deployed position projecting upwardly from a rear edge of the base structure and a stowed position in overlapping abutment with the base structure, and a support structure pivotally mounted on the base structure for angular movement between a first position in substantially parallel overlapping relation to the base structure and a second position in which it projects upwardly from the opposite end of the base structure to the backrest structure.

Preferably the frame also has a headrest structure pivotally mounted on the backrest structure for angular movement between a deployed position extending upwardly from the backrest structure and a stowed position in overlapping abutment with the backrest structure.

Any or all of said four structures may comprise an open frame or alternatively may include one or more panels.

In use, the child seat assembly is positioned on the vehicle seat with the base structure resting on the vehicle seat cushion and the backrest structure abutting against the vehicle seat back. When the seat assembly is to be used by a relatively young child in a rearward facing mode, an infant carrier in the form of a moulded seat shell is positioned with the upper part of its backrest supported on the support frame and the lower front part of the shell supported on the backrest structure. The lap belt of the vehicle seat is then positioned round the infant carrier so as to secure the infant carrier, and with it the seat assembly in place.

When the seat assembly is to be used by an older child in a forward facing mode, the frame is located in its deployed position with a seat pan secured to an upper surface thereof, a backrest pan on the backrest structure and a headrest pan secured to the headrest structure. A five-part harness has its crutch strap and lap straps secured to the seat pan and its shoulder straps detachably secured to the backrest structure. The lap belt of the vehicle seat engages with belt guides on the frame.

An embodiment of the invention will now be described, by way of example, with reference to the accompanying drawings, in which:
Figure 1 is a perspective view of a foldable seat in accordance with the invention configured for use in the forward-facing mode by an older child;
Figure 2 is a perspective view of the frame structure of the seat shown in Figure 1;
Figure 3 is a perspective view of the frame structure shown in Figure 2 but in a partially folded condition;
Figure 4 is a side view of the seats shown in Figure 1 with the backrest in an upright position and the harness omitted;
Figure 5 is a cross-section on the line 5 - 5 in Figure 4;
Figure 6 is a side view, similar to Figure 5, but showing the backrest in a reclined position;
Figure 7 is a perspective view of the seat shown in Figure 1 with the headrest pan removed and the harness partly installed;
Figure 8 is a perspective view, similar to Figure 2, but with the support structure in its second position; and
Figure 9 is a side view of the seat assembly shown in Figure with an infant carrier in place thereon.

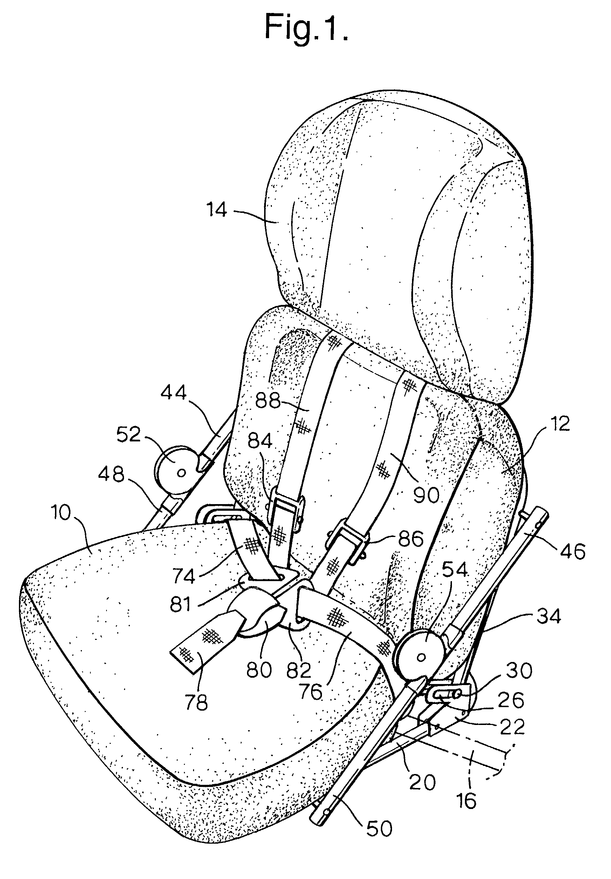

Figure 1 shows a child seat in accordance with the invention, suitable for use on an aircraft seat. In Figure 1, the seat is configured for use in forward-facing mode by a child who is old enough to sit upright. The seat comprises an upholstered seat pan 10, an upholstered backrest pan 12 and an upholstered headrest pan 14, all supported on a frame. The child seat is held in place on an adult aircraft seat (not shown) by its adult lap belt 16 (shown in chain-dotted lines).

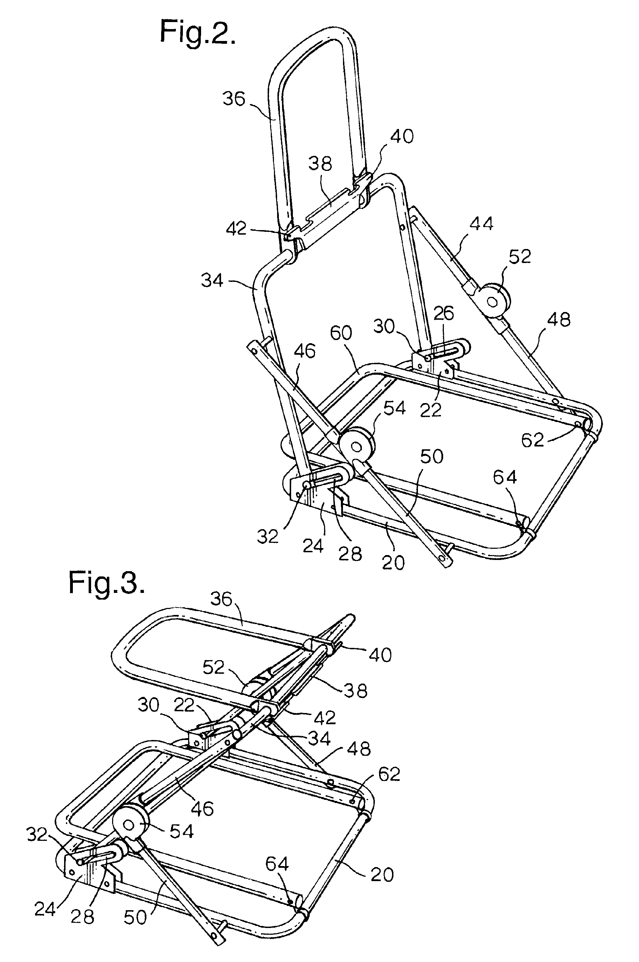

Figure 2 shows the frame of the seat of Figure 1 with the three pans 10, 12 and 14 removed. The frame has a rectangular base structure 20, formed from tubular metal and having respective belt guides 22 and 24 for the adult lap belt 16 on opposite sides thereof. Each of the belt guides 22 and 24 also contains a respective slot 26, 28 for receiving a respective sliding pivot pin 30, 32.

A U-shaped tubular backrest structure 34 has the ends of its side limbs secured to the sliding pivot pins 30 and 32 respectively. A U-shaped headrest structure 36 has the ends of its limbs pivotally secured to the backrest structure 34. A shoulder anchorage plate 38 is secured to the backrest structure 34 between the limbs of the headrest structure 36. The anchorage plate 38 has end projections 40 and 42 which abut against the headrest structure 36 when the latter is in the orientation shown in Figure 2 so as to prevent further forward movement thereof.

A pair of two-part side struts extend diagonally between the base structure and the backrest structure. Each strut consists of an upper part 44, 46 pivotally connected to the backrest structure 34, a lower part 48, 50 pivotally connected to the base structure 20, the upper and lower strut parts being interconnected by respective pivot joints 52, 54 which can be locked to secure the backrest structure 34 relative to the base structure 20 as illustrated in Figure 2, and manually released to allow the frame to be folded.

A U-shaped support structure 60 has the ends of its limbs connected by offset pivot joints 62 and 64 to the opposite end of the base structure 20 to the belt guide 22 and 24. The pivot joints 62 and 64 allow angular movement of the support structure 60 between the position shown in Figure 2 in which it abuts against the base structure 20 and an alternative position to be described hereinafter.

When the three pans 10, 12 and 14 have been removed, the frame can be folded as illustrated in Figure 3, the pivot joints 52 and 54 being unlocked to allow the upper strut parts 44 and 46 to move into alignment with the backrest structure 34 and the lower strut parts 48 and 50 to move into alignment with the base structure 20 as the backrest structure moves into a position in abutting relation with the base structure 20. The headrest structure 36 can be pivoted into overlying relationship with the backrest structure so that the folded frame forms a compact package occupying an areas not significantly greater than that of the base structure 20.

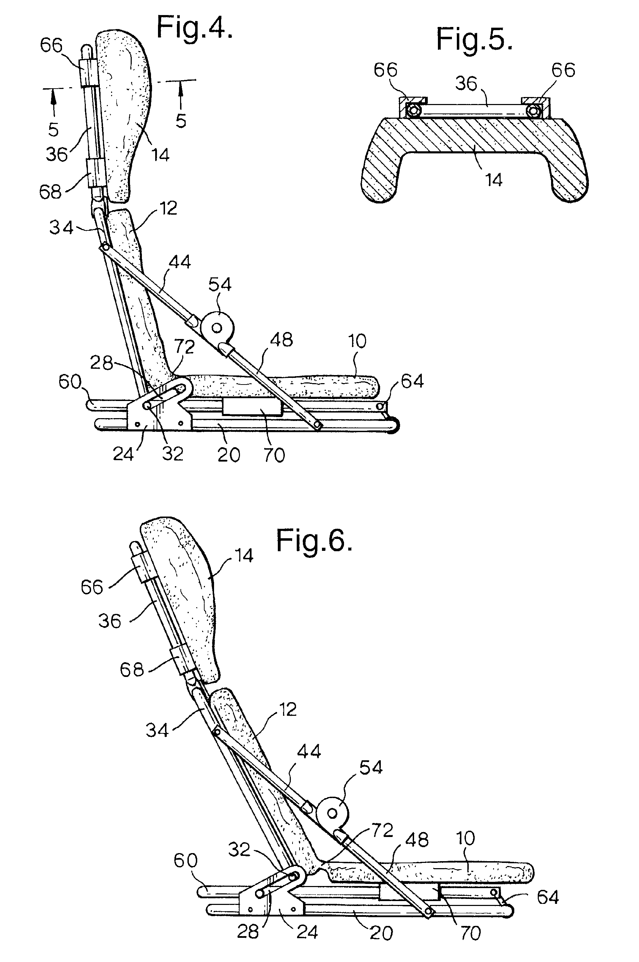

Referring to Figure 4, the headrest pan 14 is detachably secured to the headrest structure 36 by a pair of upper slide guides 66 and a pair of lower slide guides 68. As can be seen from Figure 5, the upper slide guides 66 are inwardly facing L-shapes which engage round the side limbs of the headrest structure 36. The lower slide guides 68 are similar.

The seat pan 10 is slidably mounted on the support structure 60 by a single pair of elongate slide guides 70 which are of similar cross-section to the slide guides 66. The rear edge of the seat pan 10 is connected to the backrest pan 12 by a fabric hinge 72. The backrest pan 12 rests against the backrest support structure 34 but is not positively attached thereto.

Turning to Figure 6, if it is desired to recline the seat from the position shown in Figure 4, the pivot pins 30 and 32 are slid to the front ends of the slots 26 and 28 respectively, thereby sliding the seat pan 10 along the support structure 60 to the position shown in Figure 6.

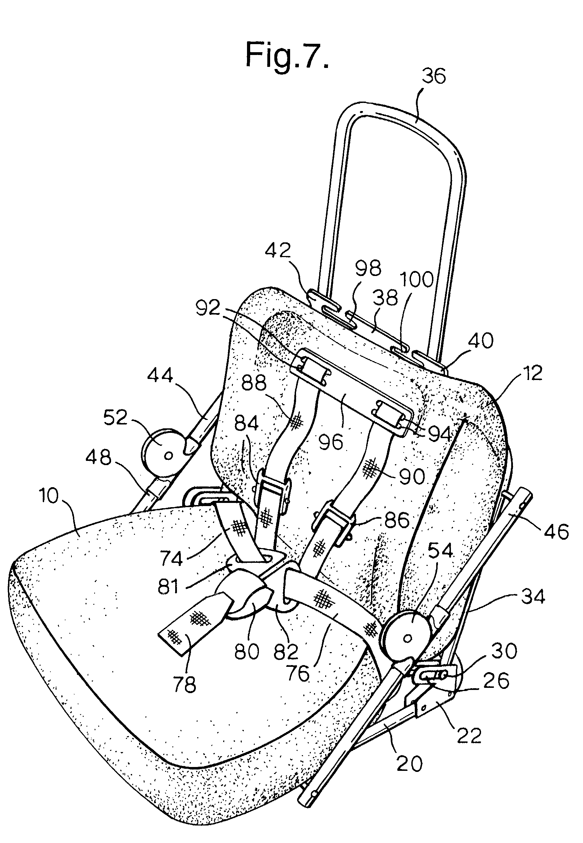

Turning to Figure 7, a five-point harness has lap straps 74 and 76 and a crutch strap 78 permanently attached to the seat pan 10. The crutch strap 78 carries a buckle body 80 having a pair of tongues 81 and 82. Each tongue contains a slot through which the corresponding lap strap 74, 76 slides freely. The upper ends of the lap straps 74 and 76 are wound on respective spring-loaded locking retractors 84 and 86, each of which can be freed to allow webbing to be protracted therefrom by depressing a pushbutton thereon.

The retractors 84 and 86 are secured to respective fixed length shoulder straps 88 and 90 which project through respective pairs of parallel slots 92 and 94 in a connector plate 96 and are sewn in place. After the seat pan and backrest pan 12 have been installed on the frame, the connector plate 96 is positioned behind the anchorage plate 38 and the shoulder straps 88 and 90 fed into open slots 98 and 100 in the anchorage plate 38. This arrangement provides a firm but detachable anchorage for the shoulder straps 88 and 90. After the shoulder straps have been installed in this way, the head pan 14 is fitted on to the headrest support structure 36. The child seat is then secured in place on the aircraft seat using the aircraft seat lap belt 16 as described above with reference to Figure 1.

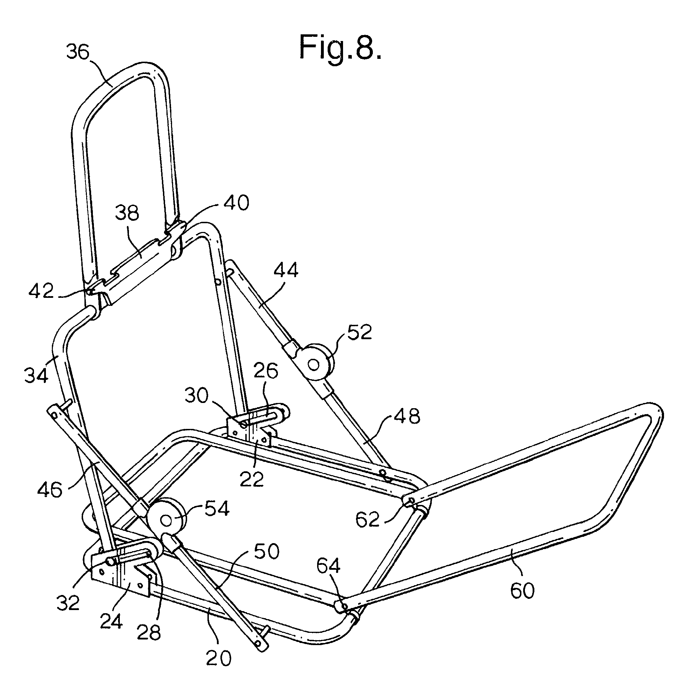

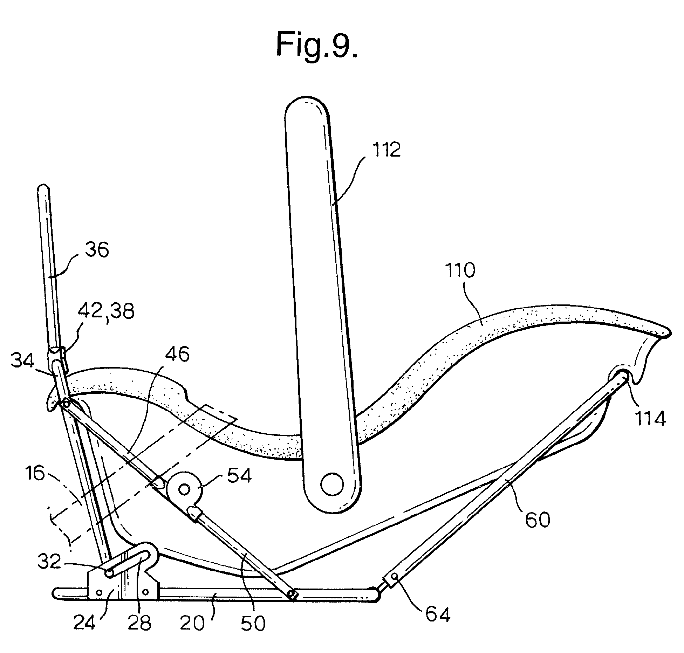

Turning to Figures 8 and 9, when the support structure is to be used with an infant carrier, the seat pan 10, the backrest pan 12 the headrest pan 14 and the connector plate 96 are removed. Next, the support structure 60 is pivoted from its position in abutment with the base structure 20 to the position shown in Figure 8 in which it projects in the opposite direction to the backrest structure 34. The frame is then positioned on the aircraft seat with the backrest structure 34 against the aircraft seat back.

As shown in Figure 9, an infant carrier has a moulded seat shell 110 and a handle 112 whereby it may be carried when occupied by an infant. The shell 110 is positioned so that a hook formation 114 on the upper part of its backrest engages round the support structure 60. The adult lap strap 16 is then placed round the infant carrier so as to secure it both to the frame and to the aircraft seat. The handle 114 can then be folded down so as to lie generally parallel with the support structure 60.

## Claims

1. A foldable child seat adapted to be secured on a vehicle seat, having a frame comprising a base structure (20), a backrest structure (34) pivotally mounted on the base structure (20) for angular movement between a deployed position projecting upwardly from a rear edge of the base structure (20) and a stowed position in overlapping abutment with the base structure (20), and a support structure (60) pivotally mounted on the base structure (20) for angular movement between a first position in substantially parallel overlapping relation to the base structure (20) and a second position in which it projects upwardly from the opposite end of the base structure (20) to the backrest structure (34).

2. A child seat according to claim 1, wherein the frame has a headrest structure (36) pivotally mounted on the backrest structure (34) for angular movement between a deployed position extending upwardly from the backrest structure (34) and a stowed position in overlapping abutment with the backrest structure (34).

3. A child seat according to claim 1 or 2, wherein the child seat assembly is positionable on a vehicle seat with the base structure (20) resting on the vehicle seat cushion and the backrest structure (34) abutting against the vehicle seat back.

4. A child seat according to claim 3, having a moulded seat shell (110) positioned with an upper part of its backrest supported on the support frame (60) and a lower front part of the shell (110) supported on the backrest structure (34).

5. A child seat according to claim 3, wherein he frame is located in its deployed position with a seat pan (10) secured to an upper surface thereof and a backrest pan (12) on the backrest structure (34).
